(19) Europäisches Patentamt / European Patent Office / Office européen des brevets

(11) **EP 3 428 745 A1**

(12) **EUROPEAN PATENT APPLICATION**

(43) Date of publication:
16.01.2019 Bulletin 2019/03

(51) Int Cl.:
*G05B 13/04* (2006.01)　　*F02D 41/22* (2006.01)
*G01K 1/02* (2006.01)　　*H01L 21/67* (2006.01)

(21) Application number: 17180761.3

(22) Date of filing: 11.07.2017

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
MA MD

(71) Applicant: Endress+Hauser Wetzer GmbH+Co. KG
87484 Nesselwang (DE)

(72) Inventor: Liani, Andrea
33030 Camino al Tagliamento (IT)

(74) Representative: Andres, Angelika Maria
Endress+Hauser (Deutschland) AG+Co. KG
PatServe
Colmarer Strasse 6
79576 Weil am Rhein (DE)

(54) **DETERMINATION OF A SPATIAL DISTRIBUTION OF A PROCESS VARIABLE**

(57)　The present invention is concerned with a method for determining a process variable (T) of a medium (8a) in a vessel or a pipe (8) comprising the steps of
- determining at least one measured value ($T_{ma}$) for said process variable for at least one first location (a) inside said vessel or pipe (8) and
- calculating at least one estimation value ($T_{ec}$) for said process variable for at least one second location (c) inside said vessel or pipe (8) using a Kalman filter.

The invention also relates to an apparatus, a computer program and a computer-readable medium each of them embodied to carry out the method.

Fig. 3

**Description**

The present invention relates to a method for determining a process variable of a medium in a vessel or a pipe, an apparatus embodied to carry out the method, a computer program and a computer-readable medium.

Field devices are commonly known in the field of process and/or automation technology. Examples are given by various types of fill level measuring devices, flow meters, pressure gages thermometers, pH meters, conductivity meters which serve for determining and/or monitoring the process variables fill level, flow pressure, temperature, pH-value, or conductivity of a medium, like e.g. a liquid or a gas. The tapical measuring principles employable in said field devices are commonly known in the state of the art as well.

Many applications necessitate determining and/or monitoring one or more process variables for a multitude of locations inside a certain volume in which the medium is comprised e.g. a vessel or a pipe. These points of interest then may build a multidimensional profile of measuring points enabling to determining a special distribution of one or more process variables of interest.

In this concern, usually a multitude of interconnected field devices or one field device comprising a multitude of interconnected sensor elements is to be installed at the various desired measuring points. In case of temperature measurement e. g. various so called multipoint sensing assemblies have become known, which comprise a multitude of temperature probes guided to each of the measuring points of interest. US6550963B2 describes a multipoint thermocouple comprising a sheath having a plurality of conductor pairs disposed within said sheath. EP3035016A1 discloses a multipoint sensing assembly wherein the temperature probes are surrounded by a sleeve member serving for protection against aggressive media. EP3118595A1 in turn is related to a flexible multipoint thermometer wherein the sleeve member is at least partially flexible such that guidance towards the various measuring points becomes more straightforward.

However, it may occur that some of the desired measuring points are not easily or not at all accessible for installation of a device or sensor. Similarly, replacement in case of a fault can be very difficult. Furthermore, the locations of interest inside the volume in which the medium is comprised may change from time to time with different processes carried out. In this case, adaption of the installation may be rather problematic or even impossible as installation of a multitude of sensors usually involves an elaborate and time-consuming installation process, In addition. installing of a large number of interconnected devices or sensors is usually also rather expensive.

Hence it is an object of the present invention to provide a possibility of determining and/or monitoring a spatial distribution of a process variable in a straightforward manner.

This object is achieved by way of the method according to claim 1, the apparatus as claimed in claim 13 the computer program as claimed in claim 14 and the computer-readable medium as claimed in claim 15.

Regarding the method, the object is solved by means of a method for determining a process variable of a medium in a vessel or a pipe comprising the steps of

- determining at least one measured value for said process variable for at least one first location inside said vessel or pipe, and
- calculating at least one estimation value for said process variable for at least one second location inside said vessel or pipe using a Kalman filter.

The measured value may e. g. be recorded by means of a sensor which is mounted at or at least partially inside the vessel or pipe. Many applications involve an inhomogeneous distribution of certain process variables inside the vessel or pipe so that knowledge of that process variable at different locations can become very important to maintain control of the processes involved.

Kalman filtering in the state of the art is widely applied for guidance, navigation or control of vehicles as well as in the field of signal processing and econometrics. This recursive algorithm is based on first producing estimates of the current state variables in a so-called prediction step and updating these estimates using a weighted average based on measurements taken at certain points over time. In this manner, estimates of unknown variables can be produced that tend to be more precise than single measurements of said variables alone. Kalman filters thus are powerful means for stochastic estimation of unknown states from a set of process measurements. In contrast to other estimation methods, the Kalman filter thereby takes into account measurement noise and is capable of minimizing the estimated error covariance.

Kalman filtering is also applied for in the field of sensor fusion, where data from various sensors or disparate sources are combined to reduce measurement uncertainty. For instance, the conference paper "Indirect measurement of the temperature via Kalman filter" by L. F. Mouzinho et al puplished in the proceedings of the XVIII IMEKO WORLD CONGRESS Metrology for a sustainable Development in 2006 in Rio de Janeiro describes a model for determining the temperature of an object inside a resistive furnace by employing a Kalman filter. By means of the present invention, a Kalman filter is applied to determine a value of a process variable of a medium. In this manner, a mathematical model describing the medium in the respective process taking into account high degrees of complexity and uncertainty has to be employed. This model taking into account various influences on the respective process serves as starting point for applying a Kalman filter according to the present invention.

In case of the present application, Kalman filtering is employed in the field of process or automation technology. For many applications and processes the process variables involved need to be known with very high precision. However, often these process variables exhibit an inhomogeneous spatial distribution, so that it is of utmost importance to provide a possibility for recording them at different locations inside a vessel or pipe in which the involved medium is contained. This either necessitates to install a plurality of sensor or to provide for a proper estimation of a value of the process variable at a specific location. Besides the costs of employing sensors at various locations the accessibility of certain locations inside the vessel or pipe complicates the situation. Thus, the present invention provides for a method for monitoring a spatial distribution or a multidimensional profile of a process variable of a medium in a vessel or pipe using a Kalman filter. Thereby, a powerful and precise possibility for monitoring spatial distributions of process variables of interest for a certain application is provided. In contrast to other methods the use of a Kalman filters involves the advantage that Kalman filters do take into account measurement uncertainties generally involved in measurements. Compared to other method, the method of the present invention thus allows for highly precise predictions of spatial distributions of a process variable of a medium in a pipe or vessel.

In a preferred embodiment the process variable is a temperature, a pressure, a flow velocity, or a density of the medium.

In another preferred embodiment at least one process parameter is taken into account for calculating said at least one estimated value. In this connection, it is of advantage, if said process parameter is a physical or chemical property of the medium, e. g. a temperature, pressure, viscosity, density, conductivity, flow velocity, or by a parameter related to the process, e. g. the geometric dimensions of said vessel or pipe. The process parameter may be a measured value, e. g. by means of a different sensor installed in or at the vessel or pipe containing the medium. Alternatively, the process parameter may also be an estimated or calculated value or any in particular already known, property of the medium, e. g. its density, conductivity, viscosity or the like. Normally, the process parameter is different from the process variable. If e. g. the process variable is the temperature, a process parameter may be given by the medium's density. The other way around, if the process variable is different from the temperature, the temperature could serve as a process parameter.

For a majority of applications it may be assumed, that the process parameters are constant throughout the entire volume of the medium, If however, the process parameters also feature inhomogeneous spatial distributions along the volume of the vessel or pipe, it is of advantage if this spatial distributions are already known prior of executing the method of the present invention.

One embodiment involves, that at least one estimation value is calculated for said first location in said vessel or pipe. In this manner, the measured and calculated value may be compared. This allows for both, checking of the reliability of the applied calculation method and/or testing the functionality of the sensor used for measuring the process variable at the first location.

The invention enables for different set ups. On the one side, values of the process variable can be calculated for specific locations where no sensors are present.

On the other hand, the method can also be applied in addition to measurements taken at various locations. Accordingly, in one embodiment of the method at least one measured value and at least one estimated value are compared for at least one location. By comparison of at least one measured value and estimated value for the same location the method as well as the working of the sensor at that specific location can be tested. The redundant determination of measured and calculated values of the process variable at the same location thus furthermore enables to carry out a predictive maintenance of the sensor. Alternatively, presumptions involved in the calculation of the estimated values can be verified.

It is of advantage, if a deviation between the at least one measured value and at least one estimated value for at least one location is determined. If e.g. a deviation between a measured and calculated value for the same location is monitored and it becomes obvious that this deviation increases with time, one possible origin is a problem of the sensor, e.g. sensor drifting, effects associated with the age of the sensor or even a complete failure. Accordingly, in one embodiment, at least one working condition of a sensor used for determination of the at least one measured value, e. g. based on the comparison of the at least one measured and estimated value for the at least one location.

It is preferred if the at least one measured value is replaced by the estimated value in the case when said deviation exceeds a predetermined threshold value. The exceeding of the predetermined threshold value in this case indicates a problem with the sensor. In order to continue the process, that measured values for this specific location may be replaced by their estimates until the process allows for a replacement of the sensor at that location.

In one embodiment, at least one measured value and at least one estimated value for at least one location are combined, e. g. by building a mathematical combination, preferably an average or weighted average. Depending on knowledge about uncertainties involved in the measurement, the measurement accuracy of the sensor, or others, more weight can be ascribed either to the measured or calculated value during data evaluation. In this manner measurement accuracy of one or more sensors can be improved by taking into account the estimated values.

In this concern it is of advantage, if at least one uncertainty of said combination of at least one measured value and at least one estimated value is determined.

In another preferred embodiment a profile of said process variable is generated taking into account said at least one measured value, estimated value and/or said combination of said measured value and estimated value for at least two different locations.

The object of the present invention is also solved by means of an apparatus for determining at least one process variable at least comprising a sensing unit and an electronics, wherein said electronics is embodied to conduct a method according to one embodiment of the method according to the invention.

The present invention is furthermore also related towards a computer program, comprising instructions which, when the program is executed by a computer, cause the computer to carry out the steps of an embodiment of the method according to the present invention.

Finally, the object is also solved by means of a computer-readable medium comprising instructions which, when executed by a computer, cause a computer to carry out an embodiment of the method according to the present invention.

It is noted, that the embodiments described in connection with the methods are mutatis mutandis applicable on the suggested apparatus, computer program, and computer-readable medium and vice versa.

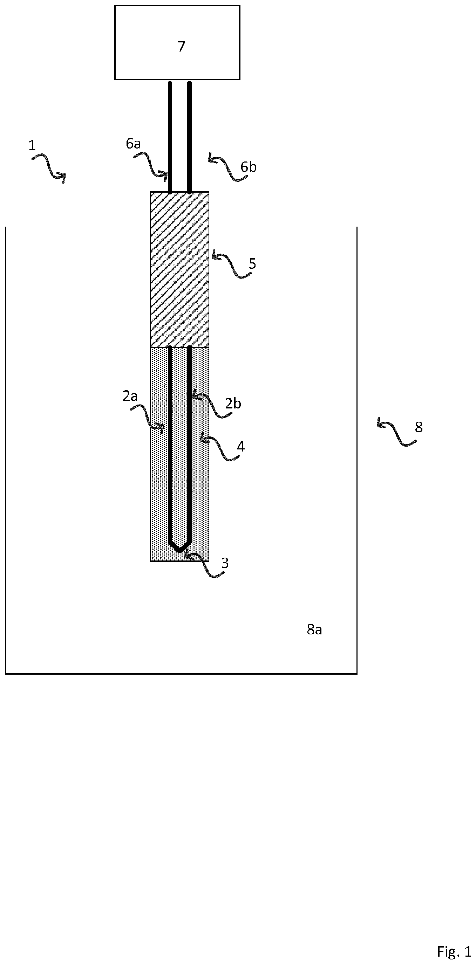

The invention will further be explained on the basis of the figures Fig. 1 - Fig.4.

Thereby, without loss of generality, the figures relate to the particular case of temperature measurement. Yet, the present invention is of course and without restriction also applicable for other sensor types, capable of monitoring different process variables.

Fig. 1 shows a scheme of a temperature probe, which comprises a thermocouple,

Fig. 2 shows a vessel in which a multipoint temperature measurement assembly is mounted,

Fig. 3 shows a vessel with two temperature sensors, wherein the temperature of a third location is to be determined in accordance with the present invention, and

Fig. 4 shows a pipe with a surface thermometer, wherein the temperature of the medium inside the pipe is to be determined in accordance with the present invention.

Fig. 1 shows a thermometer 1 comprising a temperature sensor in the form of a thermocouple with thermo wires 2a, 2b. These thermo wires 2a, 2b are connected at a hot junction 3 at which the temperature of medium 8a is to be measured. This specific location should be placed at a desired measuring location within a vessel, pipe or other container 8 suitable for keeping the medium 8a which in turn is preferably a fluid.

Here, the thermo wires 2a,2b are embedded within insulation 4, made of an insulating material. The insulation 4 and the thermo wires 2a,2b in turn are arranged in an outer sheath 5, which has a tubular form. The sheath 5 has a closed end in the vicinity of which the hot junction 3 is arranged. The thermo wires 2a,2b extend from the hot junction 3 through the sheath 5 up to its opposite end. The thermo wires 2a,2b further protrude from this end of the sheath 5 and are connected to extension wires 6a, 6b.

A sensor signal indicative for the temperature of the medium 8a at the location of the hot junction 3 may be transmitted via sensor wires 2a,2b and extension wires 6a,6b towards an electronics 7. The electronics 7 may serve for signal processing and/or data evaluation. One embodiment includes, that the method according to the present invention is implemented within electronics 7.

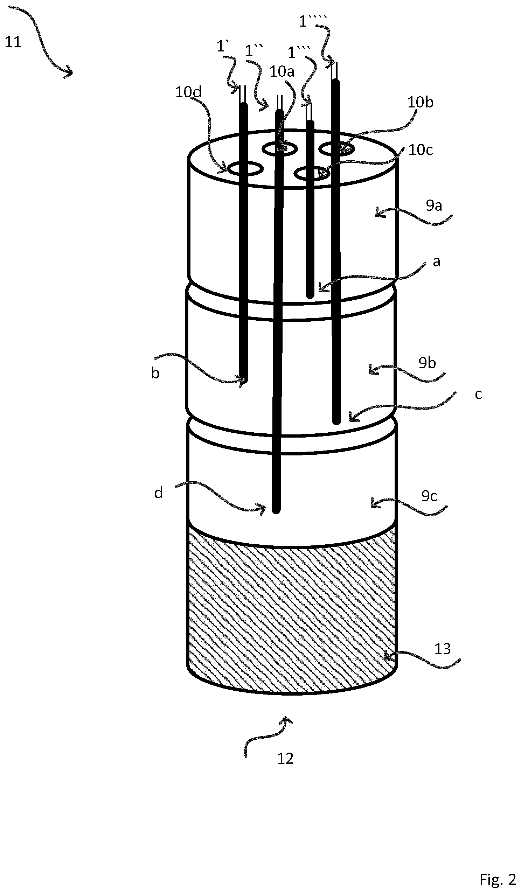

It shall be noted, that also other types of thermometers 1, e. g. sensing elements comprising at least one resistive element, can be employed. Also, the invention is not limited to a single measuring device 1 but can also be employed for any measuring assembly including a plurality of sensors, as exemplarily shown in Fig. 2 for the case of a multipoint thermometer 11. Furthermore, depending on the process variable to be determined, instead of a thermometer 1 any other type of sensor may be employed in connection with the present invention. All considerations in connection with the subsequent figures in this case apply mutatis mutandis for other sensor types. Nevertheless, a measurement device in the form of a thermometer 1 for determining and/or monitoring the temperature of the medium remains a preferred embodiment. For this reason, all embodiments shown in connection with the subsequent figures only relate to probes in the form of thermometers.

Figure 2 shows multi-point thermometer 11 capable of determining and/or monitoring the temperature of a medium 8a at different locations a,b,c.d inside a vessel or pipe 8 containing said medium 8a. For this figure for reasons of simplicity the medium 8a and the container 8 are not shown. Four temperature sensors 1', 1", 1''',1'''' in the form of thermocouples as shown in Fig. 1 are arranged inside a multitude of fittings 9a, 9b, 9c. These fittings 9a, 9b, 9c here have the form of cylindrical blocks and are arranged one upon the other to form a tower. The fittings 9a, 9b, 9c further comprise four openings 10a, 10b. 10c, 10d each for receiving the temperature sensors 1',1",1''',1''''. However, there could be only a single fitting having corresponding openings 10a, 10b, 10c, 10d or even more than the three fittings 9a, 9b, 9c shown. In the present example, the fittings 9a, 9b, 9c are in alignment with each other. Additionally the fittings 9a, 9b, 9c are piled on top of each other such that also corresponding openings lie on top of each other. The fittings 9a, 9b, 9c when stapled upon each other form a cylinder which may be inserted inside a sleeve member 12. The distal end 12 of the device 11 may also be closed by a cap or end plate, which may be welded to a sleeve member 13 in order to cover the base area of the device 11.

The temperature probes 1'1" ,1''',1'''' protrude up to different heights along the device 11. In one embodiment, those fittings, e.g. fitting 9c, further away from the electronics 7 (also not shown) may comprise less openings 10 than those closer to the electronics 7 which is due to the fact, not all of the temperature probes 1',1",1''',1'''' protrude up to that specific fitting. Since the hot junctions 3 of the temperature probes 1',1",1''',1'''' are arranged at different positions with respect to the container 8 (not shown) they are capable of sensing the temperature inside the container 8 at the different locations and thus allowing for determining the spatial distribution of the temperature inside the vessel or pipe 8 in which the medium 8a is contained. Thereby, linear or multidimensional profiles of a temperature distribution can be monitored using a unique probe. It shall be noted, that such multi-point thermometers 11 are not only known for the case of monitoring temperatures at different heights. In principle, any predetermined profile inside the vessel or pipe can be followed by a measurement assembly. However, constructive requirements can become rather complicated the more complex the desired profile inside the vessel or pipe 8 becomes.

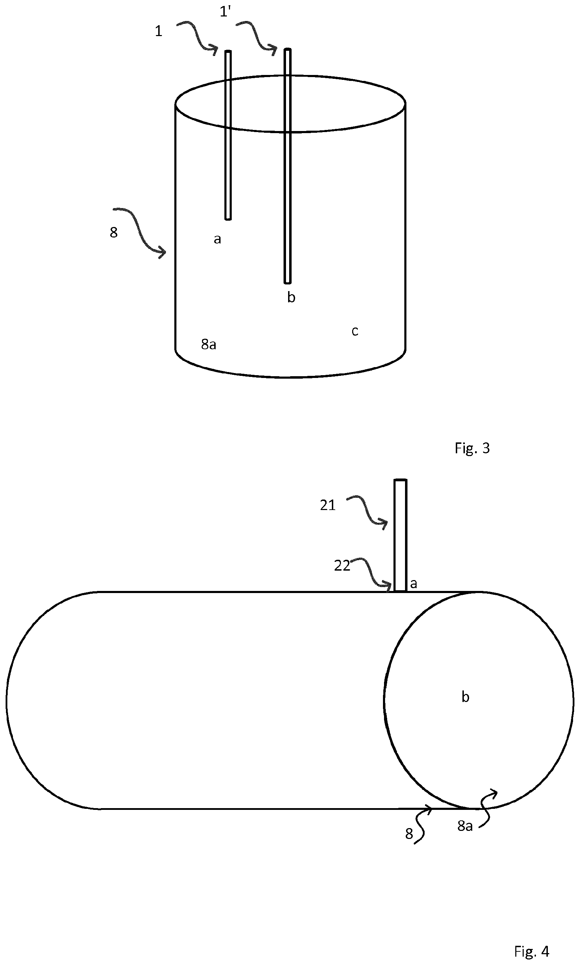

Fig. 3 shows a vessel 8 with medium 8a on which vessel 8 two temperature sensors 1,1' as described with reference to Fig. 1 are installed. The temperature sensors 1,1' are embodied to determine the temperatures of the medium 8a at the locations indicated by reference symbols a and b. Of course, also more than two temperature sensors 1,1' and also other types than thermocouples, may be employed. Alternatively, also one single temperature sensor 1 only may be installed, whereas temperatures in different locations are predicted by means of the method according to the present invention. In case of a plurality of temperature sensors either a multitude of single thermometers 1 with one sensor each is provided. These sensors may in one embodiment further be interconnected with each other. However, instead also a multi-point thermometer 11 as disclosed with reference to Fig. 2, may be used.

With the thermometers 1 and 1' the temperature $T_{ma}$ and $T_{mb}$ at the locations a and b can be measured. For the shown example, additionally the knowledge about the temperature at location c is desired. Since no further thermometer is implemented at this location, e. g. due to constructive constraints making the location inaccessible, the temperature $T_{mc}$ cannot be measured. Instead an estimated value $T_{e,c}$ of the temperature at location c can be derived by applying the Kalman filter as suggested by the present invention.

Another possible embodiment as shown in Fig. 4 concerns a surface thermometer 21 having a sensing element 22, e.g. a resistive element, at its one tip. By means of thermometer 21 the surface temperature $T_s$ of the container 8 can be measured. In several applications it is of advantage to measure the temperature without introducing the thermometer 1 itself into the process. In case of thermal equilibrium between the container 8, the medium 8a and the sensing element 22 of thermometer 21, the surface temperature is indicative for the medium temperature $T_m$. However, since an unknown amount of heat is always transferred from the container 8 towards the environment and because environmental conditions as well as the temperature of the medium $T_m$ may change over time, a certain offset between the measured surface temperature $T_s$ and the temperature of the medium 8a inside the container 8 exists. By employing a model according to the present invention, the temperature b at a certain location inside the vessel can be estimated based on the measured surface temperature $T_{sa}$ at location a.

Independently of the certain application and embodiment, for employing a Kalman filter according to the present invention intrinsic noise of the respective sensor by which the measured temperature values $T_{ma}$ and $T_{mb}$ or $T_{sa}$ are affected needs to be taken into account. It is assumed that the mean value of the noise is equal to zero. In the following the modeling by means of a Kalman filter will be explained using the embodiment according to Fig. 3. A Kalman filter is used to reconstruct the temperature $T_{e,c}$ at the location c, which may, e.g. due to constructive constraints, not be accessible by measurement.

First, a state vector x describing the temperature profile inside the vessel 8 is defined containing the state parameters $T_{ma}$, $T_{mb}$ and $T_{ec}$:

$$x = (T_{ma}, T_{mb}, T_{ec})$$

By modeling the evolution of the temperature inside the vessel 8 based on thermodynamic and fluid dynamic considerations the following set of linear stochastic equations depicted in the state space is determined, wherein k describes a certain time interval:

$$x(k+1) = A * x(k) + B * u(k+1) + w(k)$$

$$y(k+1) = C * x(k+1) + v(k+1).$$

y refers to the measured temperature at the locations a and b, the terms w(k) and v(k) refer to random variables representing the process and measurement noise, and the matrices A and B relate to the employed model describing the evolution of temperature inside vessel 8. Matrix C in turn is used to express the relation between the state parameters of vector x and the measured variables contained in vector y.

In a second step an a priori state vector

$$\hat{x}_{\overline{k}} = (\hat{T}_{\overline{a}}, \hat{T}_{\overline{b}}, \hat{T}_{\overline{c}})$$

containing estimated temperature values $\hat{T}_{\overline{a}}$, $\hat{T}_{\overline{b}}$, $\hat{T}_{\overline{c}}$ at the locations a,b and c is defined relating to known conditions in the process before time interval k. Similarly, an a posterior state vector

$$\bar{x}_k = (\bar{T}_a, \bar{T}_b, \bar{T}_c)$$

describing measured values at time interval at the locations a, b and c is defined, given the measured temperature y(k).

The same step is repeated for defining estimation errors $\overline{e}_k$ and $\overline{e}_k$ as well as the respective estimate error covariances $P_{\overline{K}}$ and $P_k$.

The algorithm itself may then comprise the following operation steps:

1) Receiving an initial temperature estimation $\hat{x}_{\overline{k}}$ and $P_{\overline{k}}$ at time interval k=0. Subsequently, for all time intervals k=1-n the following steps should be iteratively repeated:

2) Calculation of estimates for $\hat{y}_k^-(k) = C * \hat{x}_{\overline{k}}(k)$,

3) Determination of a gain L that minimizes an a posteriori error covariance defined as $L(k) = P_{\overline{k}} * C^T * (C * P_{\overline{k}} C^T + R)^{-1}$, where R is a matrix defining measurement noise covariance and is indicative for the accuracy of the thermometer 1 itself,

4) Calculation of an a posteriori temperature estimate $\bar{x}_k = \hat{x}_{\overline{k}}(k) + L(k) * (y(k) - C* \hat{x}_{\overline{k}}(k))$. Hereby, the difference between the measured y(k) and the predicted value $C * \hat{x}_{\overline{k}}(k)$ can be evaluated. Further, by means of gain L multiplying this difference, either more weight can be assigned to the measured or estimated value depending on the measurement noise covariance.

5) Calculation of an a posteriori error covariance based on an a priori error covariance $P_k(k) = (I - L(k) * C) * P_{\overline{k}}(k)$,

6) Projecting the subsequent state as $\hat{x}_{\overline{k}}(k + 1) = A*\bar{x}_k + B * u(k + 1)$, and

7) Projecting the subsequent error covariance as $P_{\overline{k}}(k + 1) = A* P_k(k)*A^T+Q$ where Q refers to a process noise cavariance matrix. By means of Q uncertainties in the mathematical formalism as well as possible deviations from the real process, e. g. unexpected variance of a certain variable in the process, may be taken into account.

8) Starting from step 2 with the inputs $\hat{x}_{\overline{k}}(k + 1)$ and $P_{\overline{k}}(k + 1)$.

By applying a Kalman filter, an estimated value for the temperature $T_{ec}$ at location c can thus be calculated in a very efficient and precise manner. A similar model can be employed for the embodiment according to Fig. 4 or for other embodiments featuring other assemblies or also other types of sensors. It shall be noted, that the Kalman filter is not only applicable for locations inside the vessel 8 where no sensors are present. In fact, estimated value for the temperatures $T_{ea}$ and $T_{eb}$ at the locations a and b can be calculated. In that case, the measured and estimated values for the temperatures $T_{ea}$ and $T_{ea}$ as well as $T_{mb}$ and $T_{eb}$ could be compared in order to prove the reliability of the presumptions incorporated in the calculations or in order to testify the working condition of the thermometers 1 or 1'. Also, the measured and estimated values for the temperatures $T_{ma}$ and $T_{ea}$ as well as $T_{mb}$ and $T_{eb}$ at locations a and b could be combined in order to increase the measurement accuracy.

**List of reference symbols**

| 1 | thermometer |
|---|---|
| 2a,2b | thermo wires |
| 3 | hot junction |
| 4 | insulation |
| 5 | outer sheath |
| 6a, 6b | extension wires |
| 7 | electronics |
| 8 | container, vessel, pipe |
| 8a | medium |
| 9, 9a, 9b, 9c | fittings |
| 10, 10a, 10b, 10c, 10d | openings or recesses |
| 11 | multipoint thermometer |
| 12 | distal end |
| 13 | weld |
| 21 | surface thermometer |
| 22 | sensing element |

a-c    locations within the vessel

**Claims**

1.  Method for determining a process variable (T) of a medium (8a) in a vessel or a pipe (8) comprising the steps of

    - determining at least one measured value ($T_{ma}$) for said process variable for at least one first location (a) inside said vessel or pipe (8) and
    - calculating at least one estimation value ($T_{ec}$) for said process variable for at least one second location (c) inside said vessel or pipe (8) using a Kalman filter.

2.  Method according to claim 1,
    wherein the process variable is a temperature (T), a pressure, a flow velocity, or a density of the medium.

3.  Method according to claim 1 or 2,
    wherein at least one process parameter is taken into account for calculating said at least one estimated value ($T_{ec}$).

4.  Method according to claim 4,
    wherein said process parameter is a physical or chemical property of the medium (8a), e. g. a temperature, pressure, viscosity, density, conductivity, flow velocity, or by a parameter related to the process, e. g. the geometric dimensions of said vessel or pipe (8).

5.  Method according to one of the preceding claims,
    further comprising the step of
    calculating at least one estimation value ($T_{ea}$) for said first location (a) in said vessel or pipe (8).

6.  Method according to one of the preceding claims,
    further comprising the step of
    comparing at least one measured value ($T_{ma}$) and at least one estimated value ($T_{ea}$) for at least one location (a).

7.  Method according to one of the preceding claims,
    further comprising the step of
    ascertaining a deviation between at least one measured value ($T_{ma}$) and at least one estimated value ($T_{ea}$) for at least one location (a).

8.  Method according to claim 6 or 7,
    further comprising the step of
    detecting at least one working condition of a sensor (1) used for determining said at least one measured value ($T_{ma}$) e. g. based on said comparison of said at least one measured ($T_{ma}$) and estimated ($T_{ea}$) value for said at least one location (a).

**9.** Method according to claim 7 or 8,
further comprising the step of
replacing said at least one measured value ($T_{ma}$) by said estimated value ($T_{ea}$) in the case when said deviation exceeds a predetermined threshold value.

**10.** Method according to one of the preceding claims,
further comprising the step of
combining at least one measured value ($T_{ma}$) and at least one estimated value ($T_{ea}$) for at least one location (a), e. g. by building a mathematical combination, preferably an average or weighted average.

**11.** Method according to claim 9,
further comprising the step of
determining at least one uncertainty of said combination of at least one measured value ($T_{ma}$) and at least one estimated value ($T_{ea}$).

**12.** Method according to one of the preceding claims,
further comprising the step of
generating a profile of said process variable (T) taking into account said at least one measured value ($T_{ma}$, $T_{mb}$, $T_{mc}$), estimated value ($T_{ea}$, $T_{eb}$, $T_{ec}$) and/or said combination of said measured value ($T_{ma}$, $T_{mb}$, $T_{mc}$) and estimated value ($T_{ma}$, $T_{mb}$, $T_{mc}$) for at least two different locations (a,b,c).

**13.** Apparatus for determining at least one process variable (T) at least comprising a sensing unit (2,3) and an electronics (7),
wherein said electronics (7) is embodied to conduct a method according to one of the preceding claims.

**14.** Computer program, comprising instructions which, when the program is executed by a computer, cause the computer to carry out the steps of the method of one of the claims 1-10.

**15.** Computer-readable medium composing instructions which, when executed by a computer, cause a computer to carry out a method according to one of the claims 1-10.

Fig. 1

Fig. 2

Fig. 3

Fig. 4

Europäisches
Patentamt

European
Patent Office

Office européen
des brevets

# EUROPEAN SEARCH REPORT

Application Number

EP 17 18 0761

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Vianna ET AL: "ESTIMATION OF THE TEMPERATURE FIELD IN PIPELINES BY USING THE KALMAN FILTER", 2nd international congress of serbian society of mechanics iconssm 2009, 1 June 2009 (2009-06-01), pages 1-10, XP055440146, DOI: 10.1016/j.renene.2016.08.049 Retrieved from the Internet: URL:http://citeseerx.ist.psu.edu/viewdoc/download?doi=10.1.1.418.1512&rep=rep1&type=pdf [retrieved on 2018-01-11] * the whole document * | 1-4, 10-15 | INV. G05B13/04 F02D41/22 G01K1/02 H01L21/67 |
| X | US 2010/106421 A1 (MACPHERSON JOHN D [US]) 29 April 2010 (2010-04-29) * abstract * * paragraph [0017] * * paragraph [0021] - paragraph [0046] * * paragraph [0067] - paragraph [0079] * * paragraph [0128] * | 1-4, 11-15 | |
| X,D | L. F. MOUZINHO ET AL.: "Indirect measurement of the temperature via Kalman filter", XVIII IMEKO WORLD CONGRESS METROLOGY FOR A SUSTAINABLE DEVELOPMENT, 2006, XP002777227, * abstract * * Sections II and III * | 1-4, 10-15 | TECHNICAL FIELDS SEARCHED (IPC) G05B F02D G01K H01L |

-/--

The present search report has been drawn up for all claims

| Place of search | Date of completion of the search | Examiner |
|---|---|---|
| The Hague | 22 June 2018 | Kielhöfer, Patrick |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

**EUROPEAN SEARCH REPORT**

Application Number

EP 17 18 0761

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Nn: "Sensing Fluid Temperature with Thermal-Ribbons", , 1 January 2008 (2008-01-01), pages 1-8, XP055440204, Retrieved from the Internet: URL:http://www.temflexcontrols.com/pdf/aa16.pdf [retrieved on 2018-01-11] * page 3 - page 7 * ----- | 1-4, 10-15 | |
| X | JAYARAM S: "A new fast converging Kalman filter for sensor fault detection and isolation", SENSOR REVIEW, IFS PUBLICATIONS, BEDFORD, GB, vol. 30, no. 3, 1 January 2010 (2010-01-01), pages 219-224, XP009502655, ISSN: 0260-2288, DOI: 10.1108/02602281011051407 * abstract * * page 219 - page 222, left-hand column * ----- | 1,5-9, 13-15 | TECHNICAL FIELDS SEARCHED (IPC) |
| X | US 2010/301332 A1 (DIBRA DONALD [DE] ET AL) 2 December 2010 (2010-12-02) * paragraph [0004] * * paragraph [0031] - paragraph [0048] * ----- | 1,5-9, 13-15 | |

The present search report has been drawn up for all claims

| Place of search | Date of completion of the search | Examiner |
|---|---|---|
| The Hague | 22 June 2018 | Kielhöfer, Patrick |

EPO FORM 1503 03.82 (P04C01)

<table>
<tr><td>Europäisches Patentamt<br>European Patent Office<br>Office européen des brevets</td><td>Application Number<br>EP 17 18 0761</td></tr>
</table>

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

## LACK OF UNITY OF INVENTION

The Search Division considers that the present European patent application does not comply with the requirements of unity of invention and relates to several inventions or groups of inventions, namely:

see sheet B

☒ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☐ None of the further search fees have been paid within the fixed time limit. The present European search report has been drawn up for those parts of the European patent application which relate to the invention first mentioned in the claims, namely claims:

☐ The present supplementary European search report has been drawn up for those parts of the European patent application which relate to the invention first mentioned in the claims (Rule 164 (1) EPC).

Europäisches
Patentamt

European
Patent Office

Office européen
des brevets

**LACK OF UNITY OF INVENTION**
**SHEET B**

Application Number

EP 17 18 0761

The Search Division considers that the present European patent application does not comply with the requirements of unity of invention and relates to several inventions or groups of inventions, namely:

```
    1. claims: 2-4, 10-12(completely); 1, 13-15(partially)

        Method, apparatus, program and medium for estimating a
        process variable based on measured values
                        ---

    2. claims: 5-9(completely); 1, 13-15(partially)

        Method, apparatus, program and medium for detecting the
        working condition of a sensor
                        ---
```

## ANNEX TO THE EUROPEAN SEARCH REPORT
## ON EUROPEAN PATENT APPLICATION NO.

EP 17 18 0761

This annex lists the patent family members relating to the patent documents cited in the above-mentioned European search report.
The members are as contained in the European Patent Office EDP file on
The European Patent Office is in no way liable for these particulars which are merely given for the purpose of information.

22-06-2018

| Patent document cited in search report | | Publication date | Patent family member(s) | | Publication date |
|---|---|---|---|---|---|
| US 2010106421 | A1 | 29-04-2010 | BR | PI0920127 A2 | 24-10-2017 |
| | | | GB | 2476749 A | 06-07-2011 |
| | | | US | 2010106421 A1 | 29-04-2010 |
| | | | WO | 2010048411 A2 | 29-04-2010 |
| US 2010301332 | A1 | 02-12-2010 | DE | 102010029457 A1 | 05-01-2011 |
| | | | US | 2010301332 A1 | 02-12-2010 |

EPO FORM P0459

For more details about this annex : see Official Journal of the European Patent Office, No. 12/82

# EP 3 428 745 A1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 6550963 B2
- EP 3035016 A1
- EP 3118595 A1

### Non-patent literature cited in the description

- **L. F. MOUZINHO et al.** Indirect measurement of the temperature via Kalman filter. *XVIII IMEKO WORLD CONGRESS Metrology for a sustainable Development,* 2006